# EUROPEAN PATENT APPLICATION

(11) **EP 4 641 287 A1**
(43) Date of publication of application: **29.10.2025**
(21) Application number: 24172587.8
(22) Date of filing: 25.04.2024
(51) Int. Cl.: G02B 27/01

(54) **HEAD-UP DISPLAY**

(71) Applicant: Valeo Comfort and Driving Assistance, 94000 Créteil (FR)
(72) Inventor: LETORT, Nicolas, 94000 Créteil (FR); RATH, Joachim, 94000 Créteil (FR); FINGER, Eckhard, 94000 Créteil (FR); OLCHEWSKY, Clement, 94000 Créteil (FR); BEN-NACHOUANE, Ayoub, 94000 Créteil (FR); GORSKI, Witold, 94000 Créteil (FR)
(74) Representative: Delplanque, Arnaud

(57) **Abstract**

A head-up display (10) comprises:
- a projection unit (20) for projecting a light beam to a partially transparent screen (40),
- a housing (30) at least partly enclosing at least the projection unit (20) and having a window (34) closed by an at least partly transparent wall (36) designed to be crossed by the light beam projected by the projection unit (20).

The wall (36) has an attenuated light transmission coefficient in at least the entire visible spectrum.

## Description

### TECHNICAL FIELD

The present invention relates to head-up display systems used, for example, in motor vehicles.

More particularly, it concerns a head-up display comprising a projection unit.

The invention applies particularly advantageously in cases where the beams generated by the sun may damage the projection unit.

### BACKGROUND ART

The principle behind vehicle head-up displays is to project images, including useful driving information for example, directly into a driver's field of vision, particularly at the vehicle windshield.

To this end, head-up displays include an image-generating device, such as a light source coupled to a screen. The screen can be, for example, a matrix of variable transmittance elements such as a liquid crystal display (LCD), or a diffuser whose upstream face is configured to be scanned by a laser beam and on which the image is formed ("laser scan" technology). Head-up displays also feature an optical transmission device for transmitting this image to a partially transparent screen, such as the vehicle's windshield, where the beam generated by the image-generating device is reflected towards the driver so that the driver can see the images without looking away from the road.

The location of the displays under the windshield of the motor vehicle makes them susceptible to solar flux, which travels through the display following the reverse path of the light rays emitted by the light source and converges, after passing through the optical transmission device, at a point on the screen. The focusing of the sun's rays, in addition to the temperature rise generated by the light source itself, is liable to damage the screen.

Solutions to this problem include the use of temperature sensors placed locally at different points on the screen. These solutions are only partially satisfactory, notably because the addition of sensors makes the device more complex and expensive. Other solutions reduce the intensity of the beam to a minimum value as soon as a temperature exceeds a certain threshold. These solutions are not optimal, as they prevent the information displayed by the device from being clearly visible.

Other head-up displays are known, comprising a unit for projecting a light beam to a partially transparent screen, and a housing at least partly enclosing the projection unit and having a window closed by an at least partly transparent wall designed to be crossed by the light beam projected by the projection unit, the wall comprising a polarizer or having an attenuated light transmittance for a narrow wavelength range in the visible spectrum. These solutions are not optimal, as they do not prevent the focusing of the other harmful wavelengths on the screen. Moreover, a polarizer may be expensive to implement in such devices.

### SUMMARY OF INVENTION

In this context, the invention proposes such a head-up display, characterized in that the wall has an attenuated light transmission coefficient in at least the entire visible spectrum.

This wall protects the projection unit from the sun's rays, which can penetrate the wall and damage the screen, particularly when the sun is at its zenith and not hidden by cloud cover.

According to other optional (and therefore non-limiting) features:
- the wall is optically isotropic,
- the light transmission coefficient is equal to or lesser than 75% and equal to or greater than 50% in at least the entire visible spectrum,
- the light transmission coefficient is wavelength dependent,
- the wall comprises metallic particles,
- the wall comprises nanoparticles having structural dimensions whose size is in the range of the visible spectrum,
- the wall comprises a transparent material covered by a partly transparent material having an attenuated light transmission coefficient in at least the entire visible spectrum,
- the visible spectrum comprises wavelengths below 780 nm and above 380 nm,
- the wall has an attenuated transmission coefficient in at least part of the ultraviolet range and/or at least part of the infrared range,
- the light transmission coefficient is equal to or lesser than 75% and equal to or greater than 50% in at least part of the ultraviolet range and/or at least part of the infrared range,
- the wall comprises nanoparticles having structural dimensions whose size is in the range of the ultraviolet range and/or the infrared range,
- the wall comprises a transparent material covered by a partly transparent material having an attenuated light transmission coefficient in the ultraviolet range and/or the infrared range,
- the ultraviolet range comprises wavelengths below 380 nm and above 280 nm, and the infrared range comprises wavelengths above 700 nm and below 1 mm,
- the projection unit comprises a screen backlit by at least one light source,
- the housing further encloses deflecting optical elements designed to deflect the light beam towards the partially transparent screen,
- the partially transparent screen is a windshield.

### DESCRIPTION OF EMBODIMENTS

In addition, various other features of the invention are apparent from the appended description with reference to the drawings, which illustrate non-limiting embodiments of the invention and in which:
figure 1 is a schematic representation of an image-generating device according to one embodiment of the invention,
figure 2 is a curve showing the light transmittance as a function of the wavelength of the transmitted light for a wall provided in the head-up display of figure 1, and
figure 3 is a curve showing the light transmittance as a function of the wavelength of the transmitted light for a wall provided in the head-up display according to another embodiment of the invention.

It should be noted that in these figures, structural and/or functional elements common to the different variants may have the same references.

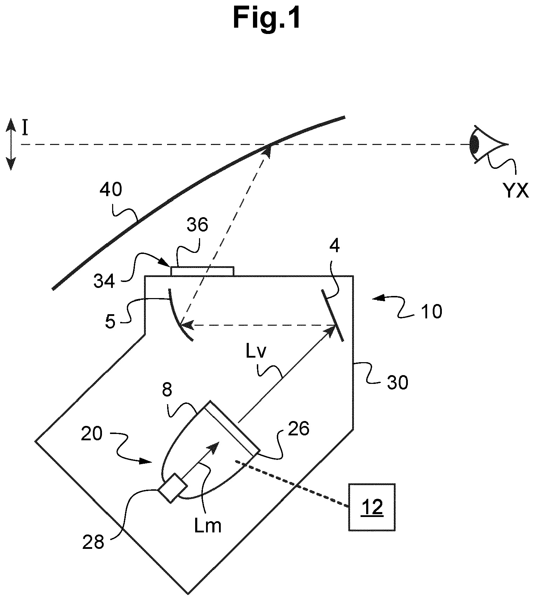

Figure 1 shows schematically the main elements of a display device 10 according to one embodiment of the invention, here a head-up display, intended for example to equip a vehicle, for example a motor vehicle.

Such a device 10 is configured to create a virtual image I in the field of vision of a driver of the vehicle, so that the driver can see this virtual image I and any information it contains without having to look away.

To this end, the display 10 comprises a projection unit 20 for projecting a light beam to a partially transparent screen 40, a housing 30 at least partly enclosing at least the projection unit 20 and having a window 34 closed by an at least partly transparent wall 36 designed to be crossed by the light beam projected by the projection unit 20.

The partially transparent screen 40 is a partially transparent blade. The partially transparent screen 40 reflects part of the light beam projected by the projection unit 20 towards the driver's eyes, so as to form a virtual image (corresponding to the image generated by the screen 26) in the driver's field of vision.

Alternatively, the partially transparent screen 40 could be fixed and/or tiltable to adapt to the user's position.

Such a partially transparent screen would be placed between the vehicle windscreen and the driver's eyes YX, in the path of the downstream light beam Lv.

According to another embodiment, the partially transparent screen 40 is confused with the vehicle windscreen. In other words, it is the vehicle windshield that acts as a partially transparent screen for the head-up display 10.

Furthermore, the head-up display comprises an optical transmission device which comprises here at least two mirrors 4, 5 arranged to reflect the downstream light beam Lv generated by the projection unit 20 towards the partially transparent screen 40. The mirrors 4, 5 advantageously enable the projection unit to be placed in a configuration in which it does not face the partially transparent screen 40, and therefore to be placed in any suitable location, typically under the vehicle dashboard.

Here, a first mirror 4 is a plane mirror, or folding mirror, and a second mirror 5 is a mirror that has a curved shape, for instance a shape optimized to produce a virtual image with a shape adapted to the shape of the partially transparent screen 40, so as to display the image I in an undistorted manner.

In other embodiments, the optical transmission device 4, 5 could comprise a different number of mirrors and/or mirrors with different shapes, as well as other optical elements such as a lens.

The projection unit 20 comprises a screen 26 and light source 28, here a backlight module, configured to produce an upstream light beam Lm, the screen 26 being configured to be illuminated by the upstream light beam Lm and a reflector 8 interposed between the light source 28 and the screen 26.

The display 26 is a liquid crystal display, for example using thin-film transistor (TFT) technology.

The projection unit 20 comprises a plurality of light sources 28. The light source 28, for example, is a light-emitting diode, here white in color, i.e. emitting over the entire visible light spectrum.

The screen 26 is configured to selectively transmit the upstream light beam Lm so as to form the downstream light beam Lv representing an image to be projected into the driver's field of vision by means of the optical transmission device 4, 5 and the partially transparent screen 40.

The head-up display comprises a control unit 12 configured to control the projection unit 20, in particular the light source 28 and the screen 26, for example as a function of setpoint signals input by the user or from various sensors on the head-up display 10.

The housing 30 (generally opaque) which encloses the projection unit 20 and the optical transmission device 4, 5, allows in particular to protect these elements from external aggression (dust, liquids, etc.).

The window 34 of housing 30 is closed by a wall 36 (sometimes referred to as a "cover window") formed, for example, by a sheet of polycarbonate-type plastic with a thickness of between 0.25 mm and 0.75 mm. The downstream light beam Lv passes through the window 34 after transmission through the optical transmission device 4, 5, here after reflection from the second mirror 5.

The temperature of the projection unit 20 may rise as a result of the vehicle's ambient temperature, the heat generated by the light source 26, and solar rays entering the housing 30 via the wall 36 along the reverse path of the downstream light beam Lv. After reflection on mirrors 4 and 5, the sun's rays can focus on a point on the screen and cause its temperature to rise.

According to an advantageous feature of the invention, the wall 36 is designed to attenuate transmitted light over the entire visible light spectrum. Moreover, the wall 36 is optically isotropic.

The light transmission coefficient of the wall 36 is, for example, equal to or lesser than 75% and equal to or greater than 50% in at least the entire visible spectrum. The light transmission coefficient may have, for example, the same value for all wavelengths, with a margin of 5%.

Advantageously, the solar power reaching the projection unit 20 is reduced and is lower than with a polarizer. Therefore, the heat absorbed by the projection unit is increasing slower in time, achieving lower maximum temperature.

Experiments show that when external radiation of 1040 W/m² is applied at an ambient temperature of 65°C, it takes 90 seconds with a transparent wall to reach a temperature of 110°C on the screen, 142 seconds with a polarizer on the wall, 156 seconds with a smoked wall with a light transmission coefficient of 75% and 498 seconds with a smoked wall with a light transmission coefficient of 54%.

For small head-up displays, the increase in temperature of screen 26 due to solar heating may be of the same order of magnitude as the rise of temperature due to exposure to light source 28.

For large head-up displays, thanks to angular selectivity, the temperature rise due to exposure to light source 28 is lower, but the temperature rise due to solar heating is higher due to the use of larger optics.

Advantageously, in particular for large head-up displays, the reduction in light intensity of beam Lv caused by the passage through the wall 36 can be compensated by increasing the intensity of source 28, while maintaining good thermal protection of screen 26.

The visible light spectrum comprises, for example, wavelengths below 780 nm and above 380 nm.

To obtain such a property, the wall 36 may be a body tinted partially transparent material. The wall may comprise, for example, metallic particles or nanoparticles having structural dimensions whose size is in the range of the visible spectrum.

Advantageously, nanoparticles further allow to change the energy of the photons of the solar flux, for example towards less harmful wavelengths.

Alternatively, the wall 36 comprises a transparent material covered by a partly transparent material having an attenuated light transmission coefficient in at least the entire visible spectrum (one surface of the partly transparent material facing the outside of housing 30). This solution allows to solve the technical problem without changing the wall of an existing head-up display.

Alternatively, the wall 36 may consist in several at least partly transparent material having a normal light transmission coefficient in at least the entire visible spectrum on both sides of a layer of material having an attenuated light transmission coefficient in at least the entire visible spectrum. Advantageously, this allows to protect the layer of material having an attenuated light transmission coefficient.

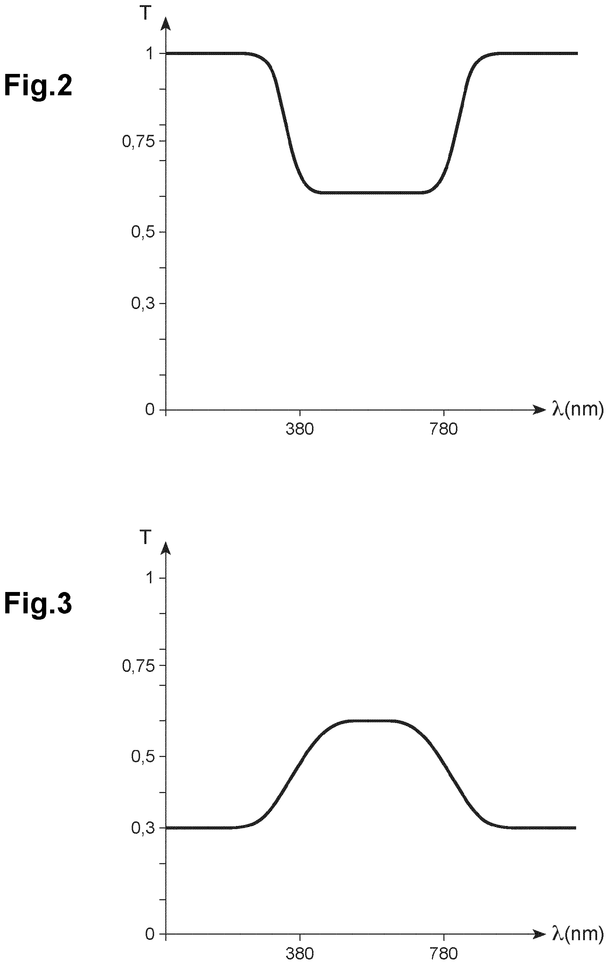

Figure 2 shows the transmittance of wall 36 as a function of the wavelength of transmitted light for the visible light spectrum (extending from approximately 400 nm to 800 nm).

According to a variant, the light transmission coefficient is wavelength dependent. The light transmission coefficient is equal to or lesser than 75% and equal to or greater than 50% in at least the entire visible spectrum. For example, the light transmission coefficient is equal to 50% for the wavelengths below 600 nm and above 380 nm and the light transmission coefficient is equal to 75% for the wavelengths below 780 nm and above 600 nm. The transition between different transmission coefficients can be continuous or abrupt.

Advantageously, this feature makes it possible to selectively filter out the wavelengths more harmful to the screen 26, while maintaining sufficient intensity to display the image on the partially transparent screen, allowing good visibility of the information displayed by the device.

The use of a wavelength-dependent variable transmission coefficient further makes it possible to correct colorimetric defects in the beam generated by the projection unit 20, particularly in the screen 26.

According to another embodiment, the wall 26 further has an attenuated light transmission coefficient in at least the entire visible spectrum and further has an attenuated light transmission coefficient in at least part of the ultraviolet range and/or at least part of the infrared range. According to the invention, the ultraviolet range comprises for example wavelengths below 380 nm and above 280 nm, and the infrared range comprises for example wavelengths above 700 nm and below 1 mm.

To obtain such a property, the wall 36 comprises, for example, nanoparticles having structural dimensions whose size is in the range of the ultraviolet range and/or in the range of the infrared range.

The light transmission coefficient in the entire visible spectrum is, for example, equal to or lesser than 75% and equal to or greater than 50%.

The light transmission coefficient in at least part of the ultraviolet range and/or in at least part of the infrared range is, for example, equal to or lesser than 75% and equal to or greater than 50%.

The light transmission coefficient is, for example, the same for all wavelengths.

According to another variant, the light transmission coefficient is lower than 50%, for example 30%, in the ultraviolet range and/or in the infrared range.

According to another variant, the light transmission coefficient is wavelength dependent.

Advantageously, this feature makes it possible to selectively filter out the wavelengths more harmful to the screen 26, strongly reducing the amount of ultraviolet and/or infrared wavelengths reaching the screen 26, while maintaining sufficient intensity in the visible spectrum to display the image on the partially transparent screen, allowing good visibility of the information displayed by the device.

Figure 3 shows the transmittance of wall 36 as a function of the wavelength of transmitted light for the ultraviolet range (extending from approximately 280 nm to 380 nm), visible light spectrum (extending from approximately 400 nm to 800 nm) and infrared range (extending from approximately 700 nm to 1 mm).

The invention is not limited to the embodiments described in connection with Figures 1 to 3.

Various other modifications can be made to the invention within the scope of the appended claims.

## Claims

1. Head-up display (10) comprising:
- a projection unit (20) for projecting a light beam to a partially transparent screen (40),
- a housing (30) at least partly enclosing at least the projection unit (20) and having a window (34) closed by an at least partly transparent wall (36) designed to be crossed by the light beam projected by the projection unit (20),
**characterized in that** the wall (36) has an attenuated light transmission coefficient in at least the entire visible spectrum.

2. Head-up display according to claim 1, wherein the wall is optically isotropic.

3. Head-up display according to claim 1 or 2, wherein the light transmission coefficient is equal to or lesser than 75% and equal to or greater than 50% in at least the entire visible spectrum.

4. Head-up display according to any of claims 1 to 3, wherein the light transmission coefficient is wavelength dependent.

5. Head-up display according to any of claims 1 to 4, wherein the wall comprises metallic particles.

6. Head-up display according to any of claims 1 to 5, wherein the wall comprises nanoparticles having structural dimensions whose size is in the range of the visible spectrum.

7. Head-up display according to any of claims 1 to 6, wherein the wall comprises a transparent material covered by a partly transparent material having an attenuated light transmission coefficient in at least the entire visible spectrum.

8. Head-up display according to any of claims 1 to 7, wherein the visible spectrum comprises wavelengths below 780 nm and above 380 nm.

9. Head-up display according to any of claim 1 to 8, wherein the wall has an attenuated transmission coefficient in at least part of the ultraviolet range and/or at least part of the infrared range.

10. Head-up display according to claim 9, wherein the light transmission coefficient is equal to or lesser than 75% and equal to or greater than 50% in at least part of the ultraviolet range and/or at least part of the infrared range.

11. Head-up display according to claim 9 or 10, wherein the wall comprises nanoparticles having structural dimensions whose size is in the range of the ultraviolet range and/or the infrared range.

12. Head-up display according to claim 9 or 10, wherein the wall comprises a transparent material covered by a partly transparent material having an attenuated light transmission coefficient in the ultraviolet range and/or the infrared range.

13. Head-up display according to any of claims 9 to 12, wherein the ultraviolet range comprises wavelengths below 380 nm and above 280 nm, and wherein the infrared range comprises wavelengths above 700 nm and below 1 mm.

14. Head-up display according to any of claims 1 to 13, wherein the projection unit (20) comprises a screen (26) backlit by at least one light source (28).

15. Head-up display according to any of claims 1 to 14, wherein the housing (30) further encloses deflecting optical elements (4, 5) designed to deflect the light beam towards the partially transparent screen (40).
